# EUROPEAN PATENT APPLICATION

(11) **EP 1 916 453 A1**
(43) Date of publication of application: **30.04.2008**
(21) Application number: 07020446.6
(22) Date of filing: 18.10.2007
(51) Int. Cl.: F16H 61/06, F16H 61/20

(54) **Hydraulic pressure control device and method for continuously variable transmission**

(30) Priority: 24.10.2006 JP 2006288534
(71) Applicant: JATCO Ltd, Fuji-shi, Shizuoka 417-8585 (JP)
(72) Inventor: Tanaka, Hiroyasu, Fuji-shi Shizuoka 417-8585 (JP); Wakayama, Hideshi, Fuji-shi Shizuoka 417-8585 (JP); Sekiguchi, Shoichi, Fuji-shi Shizuoka 417-8585 (JP); Tani, Yasuhiro, Fuji-shi Shizuoka 417-8585 (JP); Arisawa, Shinichi, Fuji-shi Shizuoka 417-8585 (JP); Saitou, Toshio, Fuji-shi Shizuoka 417-8585 (JP); Fukagawa, Takashi, Fuji-shi Shizuoka 417-8585 (JP); Inoue, Takuichiro, Fuji-shi Shizuoka 417-8585 (JP)
(74) Representative: Schaeberle, Steffen

(57) **Abstract**

A hydraulic pressure control device is provided that that controls hydraulic pressure of a clutch supplying torque to a continuously variable transmission while the vehicle is stopped and in a running range. The hydraulic pressure control device has an control section that estimates a clutch engagement hydraulic pressure for the clutch based on initially rotational movement of a primary pulley of the continuously variable transmission, and then controls regulation of the hydraulic pressure to the clutch to a designated pressure that is no greater than the clutch engagement hydraulic pressure, when the vehicle is stopped and in the running range, so that the torque from the engine does not rotate a secondary pulley of the continuously variable transmission.

## Description

### CROSS-REFERENCE TO RELATED APPLICATIONS

This application claims priority to Japanese Patent Application No. 2006-288534, filed on October 24, 2006. The entire disclosure of Japanese Patent Application No. 2006-288534 is hereby incorporated herein by reference.

### BACKGROUND OF THE INVENTION

### Field of the Invention

The present invention relates to an improvement for a hydraulic pressure control device for a continuously variable transmission. More specifically, the present invention relates to a hydraulic pressure control device that controls hydraulic pressure of a clutch supplying torque to a continuously variable transmission while the vehicle is stopped and in a running range. Background Information

In conventional belt-type continuously variable transmissions, there is a technique for carrying out a so-called idle neutral control for improving standing time fuel consumption. When using the so-called idle neutral control, a forward or reverse clutch and a forward/reverse switching clutch are released to create a state similar to when the shift range is in the neutral range, and the drive load of the engine is reduced to achieve idle rotation during a vehicle stop in a state in which the shift range is maintained in the drive range or another running range. An example of the so-called idle neutral control is disclosed in Japanese Laid-Open Patent Application No. 2002-295529.

In a conventional idle neutral control, when the driver attempts to start moving from the idle neutral control, it is necessary to immediately engage a forward clutch or the like and create a state in which movement can be started. The clutch pressure in the idle neutral state must be accurately controlled and kept at a prescribed clutch pressure that is slightly lower than the pressure at which the clutch is engaged.

If the clutch pressure cannot be controlled and kept at this prescribed clutch pressure, there will be variations in the hydraulic system during idle neutral control, variations in the accuracy of the clutch components, and installation error variations. Thus, either resulting in a continuously variable transmission in which the clutch cannot be expected to maintain an engaged state and fuel consumption cannot be expected to be improved, or resulting in a continuously variable transmission that has reduced start-up performance in which the clutch pressure is reduced and time is required to start the movement.

Consequently, Japanese Laid-Open Patent Application No. 2002-295529 discloses a method in which a torque transmission point at which the clutch is engaged and torque begins to be transmitted is determined by learning from the prior engagement of the clutch. Specifically, a comparison is made between the clutch input rotational speed and the engine speed when the clutch is gradually engaged, and the clutch supply hydraulic pressure at the time that the clutch input rotational speed is lower than the engine speed by a prescribed rotational speed is determined to be the torque transmission point. The clutch supply hydraulic pressure is controlled and the idle neutral control is carried out so that the learned torque transmission point is maintained when the vehicle is stopped in the D range.

In view of the above, it will be apparent to those skilled in the art from this disclosure that there exists a need for an improved hydraulic pressure control device for a continuously variable transmission. This invention addresses this need in the art as well as other needs, which will become apparent to those skilled in the art from this disclosure.

### SUMMARY OF THE INVENTION

However, it has been discovered that in the conventional idle neutral control, a sensor for detecting the input rotational speed of the clutch is necessary. This additional sensor increases costs and weight of the transmission. Also in the conventional idle neutral control, the freedom to select a desired layout may be compromised by the mounting location of the sensor.

Therefore, one object of the present invention is to provide a hydraulic pressure control device for a belt-type continuously variable transmission that can accurately estimate the torque transmission point of the clutch without providing a sensor for sensing the input rotational speed of the clutch.

In accordance with one aspect of the present invention, a hydraulic pressure control device is provided that basically comprises a hydraulic pressure regulating section, a rotational movement detecting section and a control section. The hydraulic pressure regulating section selectively supplies hydraulic pressure to a clutch operatively disposed between an engine and a continuously variable transmission to selectively transmit torque from the engine to a primary pulley of the continuously variable transmission. The rotational movement detecting section detects rotational movement of the primary pulley of the continuously variable transmission when the hydraulic pressure acting on the clutch by the hydraulic pressure regulating section reaches a torque transmission point in which the clutch is in an engaged state to start rotating the primary pulley, and outputs a signal during a change of the clutch from a disengaged state to the engaged state so that the signal is indicative of the torque transmission point corresponding to initial movement of the primary pulley of the continuously variable transmission. The control section estimates a clutch engagement hydraulic pressure at which the clutch is switched to the engaged state when a vehicle is stopped and in a running range based on the hydraulic pressure acting on the clutch by the hydraulic pressure regulating section when the rotational movement detecting section initially detects the torque transmission point. The control section further controls the hydraulic pressure regulating section to regulate the hydraulic pressure to the clutch to a designated pressure that is no greater than the clutch engagement hydraulic pressure corresponding to the torque transmission point, when the vehicle is stopped and in the running range, so that the torque from the engine does not rotate a secondary pulley of the continuously variable transmission via a drive belt wrapped around the primary pulley and the secondary pulley.

These and other objects, features, aspects and advantages of the present invention will become apparent to those skilled in the art from the following detailed description, which, taken in conjunction with the annexed drawings, discloses a preferred embodiment of the present invention.

### BRIEF DESCRIPTION OF THE DRAWINGS

Referring now to the attached drawings which form a part of this original disclosure:

Figure 1 is a simplified schematic view of a vehicle with an automatic transmission that is equipped with a hydraulic pressure control device in accordance with one embodiment of the present invention; and

Figure 2 is a timing chart showing an example of a control for learning the torque transmission point.

### DETAILED DESCRIPTION OF THE PREFERRED EMBODIMENTS

Selected embodiments of the present invention will now be explained with reference to the drawings. It will be apparent to those skilled in the art from this disclosure that the following descriptions of the embodiments of the present invention are provided for illustration only and not for the purpose of limiting the invention as defined by the appended claims and their equivalents.

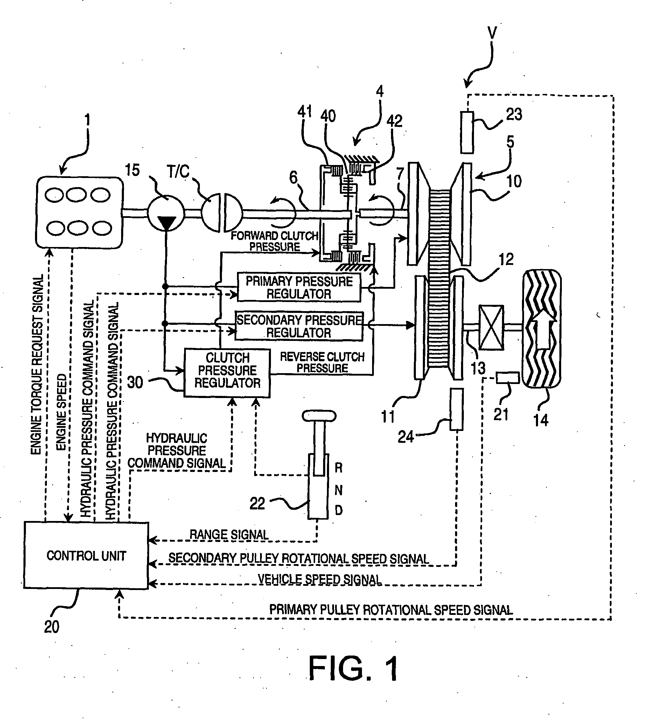

Referring initially to Figure 1, a vehicle V is schematically illustrated that is equipped with an internal combustion engine 1, a forward/reverse switching mechanism 4 and a V-belt-type continuously variable transmission 5 that are controlled by a hydraulic pressure control device in accordance with one preferred embodiment of the present invention. In Figure 1, the continuously variable transmission 5 is primarily configured from the forward/reverse switching mechanism 4 connected to an engine 1 by a driveshaft 6, and the continuously variable transmission 5 connected to an output shaft 7 of the forward/reverse switching mechanism 4. The continuously variable transmission 5 has a primary (input shaft-side) pulley 10 and a secondary (output shaft-side) pulley 11 connected to the output shaft 13. These variable pulleys 10 and 11 are operatively connected by a V-belt 12. The output shaft 13 is connected to a drive wheel 14 via an idler gear or a differential gear. A torque converter T/C or another such start-up element is disposed between the engine 1 and the input side of the forward/reverse switching mechanism 4. A hydraulic pump 15 is operatively coupled to the output shaft of the engine 1. The hydraulic pump 15 supplies hydraulic fluid to the forward/reverse switching mechanism 4 as discussed below.

A control unit 20 is provided that controls or sets a hydraulic pressure command value and sends a control command to a clutch pressure regulator 30 on the basis of driving actions and driving conditions such as a vehicle speed signal from a vehicle speed sensor 21, a range signal from an inhibitor switch 22 actuated by the shift lever, an engine speed signal from the engine 1 (or an engine control device), the rotational speed of the primary pulley 10 from a primary pulley rotational speed sensor 23, and the like. The inhibitor switch 22 selects, e.g., a forward or drive range (D range), a neutral position (N range), or a reverse range (R range) in response to movement of a shift lever by the driver. A secondary pulley rotational speed sensor 24 is also provided to detect the rotational speed of the secondary pulley 11. The vehicle speed sensor 21, the inhibitor switch 22, the primary pulley rotational speed sensor 23, and the secondary pulley rotational speed sensor 24 are operatively connected to send signals to the control unit 20. The forward range (D range) and the reverse range (R range) constitute running ranges of the vehicle.

As explained below, a clutch engagement hydraulic pressure is estimated by the control unit 20 using a pulse signal from the primary pulley rotational speed sensor 23 that detects the rotational movement of the primary pulley 10. It is therefore unnecessary to provide a sensor for sensing the input rotational speed of the forward/reverse switching mechanism 4. Thus, the arrangement of this embodiment makes it possible to reduce costs and weight as well as to prevent the freedom to select the desired layout from being compromised.

The control unit 20 preferably includes a microcomputer with a torque control program that controls the hydraulic pressure for controlling the forward/reverse switching mechanism 4 to transmit torque from the engine 1 to the primary pulley 10 as discussed below. The control unit 40 also controls engine torque and speed by controlling fuel injection amount to the engine 1 and throttle position. The control unit 40 can also include other conventional components such as an input interface circuit, an output interface circuit, and storage devices such as a ROM (Read Only Memory) device and a RAM (Random Access Memory) device. It will be apparent to those skilled in the art from this disclosure that the precise structure and algorithms for the control unit 40 can be any combination of hardware and software that will carry out the functions of the present invention.

In the forward/reverse switching mechanism 4, the power transmission path between the engine 1 and the primary pulley 10 is formed by a switching planetary gear set 40, a forward clutch 41 and a reverse clutch 42. When the vehicle travels forward, the forward clutch 41 is engaged and the reverse clutch 42 is released. When the vehicle travels in reverse, the reverse clutch 42 is engaged and the forward clutch 41 is released. When the vehicle is in a neutral position (neutral or park), the forward clutch 41 and the reverse clutch 42 are both released.

The engagement states of the forward clutch 41 and the reverse clutch 42 are controlled by the clutch pressure regulator 30. The clutch pressure regulator 30 supplies hydraulic fluid at a prescribed pressure to the forward clutch 41 and the reverse clutch 42 in accordance with a control command from the control unit 20. The clutch pressure regulator 30 adjusts the pressure of oil supplied to the forward clutch 41 and the reverse clutch 42, where the hydraulic pressure from the hydraulic pump 15 is assumed to be the initial pressure. The hydraulic pump 15 is connected to the input side or the like of the forward/reverse switching mechanism 4, and is driven by the engine 1.

The clutch pressure regulator 30 adjusts the pressure of oil supplied to the forward clutch 41 and the reverse clutch 42 in accordance with the hydraulic pressure command value, and engages or releases the forward clutch 41 and the reverse clutch 42.

The forward clutch 41 and the reverse clutch 42 are independently engageable. During forward movement (range signal = D range), forward clutch pressure is supplied to engage the forward clutch 41 is engaged, while the reverse clutch pressure is connected to the drain and the reverse clutch 42 is released. During rearward movement (range signal = R range), the forward clutch pressure is connected to the drain and the forward clutch 41 is released, while reverse clutch pressure is supplied and the reverse clutch 42 is engaged. In the neutral position (range signal = N range), the forward clutch pressure and the reverse clutch pressure are both connected to the drain, and the forward clutch 41 and the reverse clutch 42 are both released.

The gear ratio of the continuously variable transmission 5 or the contact frictional force of the V-belt is controlled by a pair of hydraulic pressure regulators that are actuated by a command from the control unit 20.

The primary pulley rotational speed sensor 23 faces an output gear (not shown) mounted on the primary pulley 10 for detecting the rotational speed of the primary pulley 10. Teeth are formed on the outer circumference of the output gear at equal intervals. Therefore, the output waveform detected by the primary pulley rotational speed sensor 23 is a pulse having a regular pitch at a constant vehicle speed. In other words, the primary pulley rotational speed sensor 23 is a pulse sensor that outputs a pulse signal in synchronization with the rotation of the primary pulley.

In a V-belt-type continuously variable transmission where a sensor for detecting the rotational speed of the forward clutch 41 is not provided, it is impossible to determine changes in the neutral state based on the clutch rotational speed detected by such a sensor. Therefore, in the present embodiment, the neutral state is detected using the pulse signal of the primary pulley rotational speed sensor 23 that detects the rotational speed of the primary pulley 10. Specifically, when the forward clutch 41 reaches a torque capacity at which torque begins to be transmitted, a small amount of torsional torque is transmitted to the output side (engaged member side) of the forward clutch 41. The engaged member (e.g., a drive shaft) is twisted, and the primary pulley rotational speed sensor 23 detects this twisting and outputs a pulse signal to the control unit 20. Based on the input pulse signal, the control unit 20 learns the torque transmission point at which the forward clutch 41 begins to transmit torque. At this small amount of torsional torque, the tires do not rotate even if the drive shaft generates torsion.

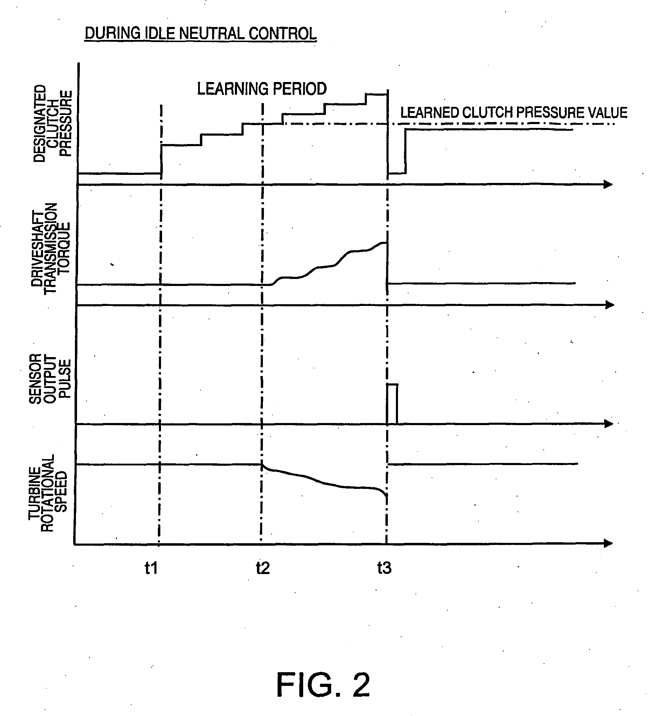

The learning of the torque transmission point will be described using the timing chart in Figure 2. As a precondition, it is assumed that the vehicle is stopped while the shift range is kept in the drive range D, and idle neutral control is carried out with the forward clutch 41 released. During idle neutral control (time t1), the designated clutch pressure for engaging the forward clutch 41 is increased in a stepwise fashion with a specified hydraulic pressure.

At time t2, torque begins to be transmitted to the driveshaft 7 that is connected to the output shaft 13 via the continuously variable transmission 5, the rotational speed of the turbine of the torque converter turbine T/C is reduced, and the forward clutch 41 is switched from a disengaged state to an engaged state. The designated pressure reached during switching to this engaged state is the torque transmission point.

At time t3, the primary pulley rotational speed sensor 23 senses the torsion of the driveshaft 7, and outputs the results to the control unit 20 as a pulse signal. The control unit 20 stores a designated clutch pressure learned value corresponding to the toque transmission point on the basis of the designated clutch pressure by the initial input of the pulse signal following an increase in the designated clutch pressure. The pressure difference between the designated clutch pressure corresponding to the torque transmission point and the designated clutch pressure at the time of output of the pulse signal from the primary pulley rotational speed sensor 23 is initially determined in advance experimentally or otherwise. This pressure difference is set so that the designated clutch pressure is lower by a small prescribed hydraulic pressure than the designated clutch pressure corresponding to the torque transmission point at which torque begins to be transmitted. The disengaged state of the forward clutch 41 is thereby ensured and fuel efficiency is improved.

After time t3, the designated clutch pressure is controlled based on the designated clutch pressure learned value thus stored, and idle neutral control is carried out. Thus, during idle neutral control, the designated clutch pressure learned value is used to hold the hydraulic pressure of the forward clutch 41 at a point just below the torque transmission point at which torque begins to be transmitted. It is also possible to repeat the learning from time t1 to t3 several times, average the learned values of designated clutch pressure during detection of a pulse signal in the respective learning periods, and obtain a final learned value of the designated clutch pressure.

Therefore, in the illustrated embodiment, a hydraulic pressure control device is provided that basically comprises the clutch pressure regulator 30 constituting a hydraulic pressure regulating section, the primary pulley rotational speed sensor 23 constituting a rotational movement detecting section and the control unit 20 constituting a control section. The clutch pressure regulator 30 (hydraulic pressure regulating section) selectively supplies hydraulic pressure to the clutch 41 which is operatively disposed between the engine and the continuously variable transmission 5 to selectively transmit torque from the engine 1 to the primary pulley 10 of the continuously variable transmission 5. The primary pulley rotational speed sensor 23 (rotational movement detecting section) detects rotational movement of the primary pulley 10 of the continuously variable transmission 5 when the hydraulic pressure acting on the clutch 41 by the clutch pressure regulator 30 (hydraulic pressure regulating section) reaches a torque transmission point in which the clutch 41 is in an engaged state to start rotating the primary pulley 10, and outputs a signal during a change of the clutch 41 from a disengaged state to the engaged state so that the signal is indicative of the torque transmission point corresponding to initial movement of the primary pulley 10 of the continuously variable transmission 5. The control unit 20 (control section) estimates a clutch engagement hydraulic pressure at which the clutch 41 is switched to the engaged state when the vehicle is stopped and in the running range (e.g., D range) based on the hydraulic pressure acting on the clutch 41 by the clutch pressure regulator 30 (hydraulic pressure regulating section) when the primary pulley rotational speed sensor 23 (rotational movement detecting section) initially detects the torque transmission point. The control unit 20 (control section) further controls the clutch pressure regulator 30 (hydraulic pressure regulating section) to regulate the hydraulic pressure to the clutch 41 to a designated pressure that is no greater than the clutch engagement hydraulic pressure corresponding to the torque transmission point, when the vehicle is stopped and in the running range, so that the torque from the engine 1 does not rotate the secondary pulley 11 of the continuously variable transmission 5 via the drive belt 12 wrapped around the primary pulley 10 and the secondary pulley 11.

Therefore, it is possible to estimate the torque transmission point at which the clutch begins to transmit torque, without providing a sensor for detecting the input rotational speed of the clutch 41. It is also possible to learn the clutch engagement hydraulic pressure (learned value) at which the clutch 41 is switched to an engaged state on the basis of the engagement hydraulic pressure (designated pressure) when a pulse signal is detected. It is therefore possible to estimate the learned value of the clutch pressure while taking into consideration variations in the hydraulic system, variations in the accuracy of the clutch components, and installation error variations.

### GENERAL INTERPRETATION OF TERMS

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts. The term "detect" as used herein to describe an operation or function carried out by a component, a section, a device or the like includes a component, a section, a device or the like that does not require physical detection, but rather includes determining, measuring, modeling, predicting or computing or the like to carry out the operation or function. The term "configured" as used herein to describe a component, section or part of a device includes hardware and/or software that is constructed and/or programmed to carry out the desired function.

While only selected embodiments have been chosen to illustrate the present invention, it will be apparent to those skilled in the art from this disclosure that various changes and modifications can be made herein without departing from the scope of the invention as defined in the appended claims. For example, the size, shape, location or orientation of the various components can be changed as needed and/or desired. Components that are shown directly connected or contacting each other can have intermediate structures disposed between them. The functions of one element can be performed by two, and vice versa. The structures and functions of one embodiment can be adopted in another embodiment. It is not necessary for all advantages to be present in a particular embodiment at the same time. Every feature which is unique from the prior art, alone or in combination with other features, also should be considered a separate description of further inventions by the applicant, including the structural and/or functional concepts embodied by such feature(s). Thus, the foregoing descriptions of the embodiments according to the present invention are provided for illustration only, and not for the purpose of limiting the invention as defined by the appended claims and their equivalents.

## Claims

1. A hydraulic pressure control device comprising:
a hydraulic pressure regulating section that selectively supplies hydraulic pressure to a clutch operatively disposed between an engine and a continuously variable transmission to selectively transmit torque from the engine to a primary pulley of the continuously variable transmission;
a rotational movement detecting section that detects rotational movement of the primary pulley of the continuously variable transmission when the hydraulic pressure acting on the clutch by the hydraulic pressure regulating section reaches a torque transmission point in which the clutch is in an engaged state to start rotating the primary pulley, and that outputs a signal during a change of the clutch from a disengaged state to the engaged state so that the signal is indicative of the torque transmission point corresponding to initial movement of the primary pulley of the continuously variable transmission; and
a control section that estimates a clutch engagement hydraulic pressure at which the clutch is switched to the engaged state when a vehicle is stopped and in a running range based on the hydraulic pressure acting on the clutch by the hydraulic pressure regulating section when the rotational movement detecting section initially detects the torque transmission point,
the control section further controls the hydraulic pressure regulating section to regulate the hydraulic pressure to the clutch to a designated pressure that is no greater than the clutch engagement hydraulic pressure corresponding to the torque transmission point, when the vehicle is stopped and in the running range, so that the torque from the engine does not rotate a secondary pulley of the continuously variable transmission via a drive belt wrapped around the primary pulley and the secondary pulley.

2. The hydraulic pressure control device according to claim 1, wherein
the control section is configured to repeat estimating of the clutch engagement hydraulic pressure for a prescribed number of times prior to setting a final value for the clutch engagement hydraulic pressure.

3. The hydraulic pressure control device according to claim 2, wherein
the control section is configured to control the hydraulic pressure regulating section to regulate the hydraulic pressure to the clutch so that the hydraulic pressure of the clutch is less than the clutch engagement hydraulic pressure by a prescribed amount while the vehicle is stopped and in the running range.

4. The hydraulic pressure control device according to claim 1, wherein
the control section is configured to control the hydraulic pressure regulating section to regulate the hydraulic pressure to the clutch so that the hydraulic pressure of the clutch is less than the clutch engagement hydraulic pressure by a prescribed amount while the vehicle is stopped and in the running range.

5. A hydraulic pressure control method comprising:
increasing hydraulic pressure to a clutch operatively disposed between an engine and a continuously variable transmission to selectively transmit torque from the engine to a primary pulley of the continuously variable transmission while a vehicle containing the continuously variable transmission is stopped and in a running range;
detecting rotational movement being transmitted to the primary pulley of the continuously variable transmission when the hydraulic pressure acting on the clutch by the hydraulic pressure regulating section reaches a torque transmission point in which the clutch is in an engaged state to start rotating the primary pulley;
outputting a signal during a change of the clutch from a disengaged state to the engaged state so that signal the indicates the torque transmission point in which initial movement of the primary pulley of the continuously variable transmission occurs;
estimating a clutch engagement hydraulic pressure at which the clutch is switched to the engaged state when the vehicle is stopped and in the running range based on the hydraulic pressure acting on the clutch when the signal is initially detected indicating the torque transmission point; and
controlling the hydraulic pressure to the clutch to a designated pressure that is no greater than the clutch engagement hydraulic pressure corresponding to the torque transmission point, when the vehicle is stopped and in the running range based on the clutch engagement hydraulic pressure that was estimated so that the torque from the engine does not rotate a secondary pulley of the continuously variable transmission via a drive belt wrapped around the primary pulley and the secondary pulley.

6. The hydraulic pressure control method according to claim 5, wherein
the estimating of the clutch engagement hydraulic pressure is accomplished by repeatedly estimating the clutch engagement hydraulic pressure for a prescribed number of times prior to setting a final value for the clutch engagement hydraulic pressure.

7. The hydraulic pressure control method according to claim 6, wherein
the controlling of the hydraulic pressure to the clutch is regulated so that the hydraulic pressure of the clutch is less than the engagement hydraulic pressure by a prescribed amount while the vehicle is stopped and in the running range.

8. The hydraulic pressure control method according to claim 5, wherein
the control section controls the hydraulic pressure regulating section to regulate the hydraulic pressure to the clutch so that the hydraulic pressure of the clutch is less than the engagement hydraulic pressure by a prescribed amount while the vehicle is stopped and in the running range.
